Europäisches Patentamt

European Patent Office

Office européen des brevets

(19)

(11) Veröffentlichungsnummer : **0 019 194**
**B1**

(12) **EUROPÄISCHE PATENTSCHRIFT**

(45) Veröffentlichungstag der Patentschrift :
03.08.83

(21) Anmeldenummer : **80102472.0**

(22) Anmeldetag : **06.05.80**

(51) Int. Cl.³ : **H 04 B   3/23**

(54) **Digital-Fernmeldesystem mit mindestens einem Vierdrahtleitungsabschnitt.**

(30) Priorität : **21.05.79 DE 2920575**

(43) Veröffentlichungstag der Anmeldung :
**26.11.80 Patentblatt 80/24**

(45) Bekanntmachung des Hinweises auf die Patenterteilung : **03.08.83 Patentblatt 83/31**

(84) Benannte Vertragsstaaten :
**AT BE CH DE FR IT LI NL SE**

(56) Entgegenhaltungen :
**DE A 2 846 105**

(73) Patentinhaber : **SIEMENS AKTIENGESELLSCHAFT**
**Berlin und München Wittelsbacherplatz 2**
**D-8000 München 2 (DE)**

(72) Erfinder : **Strehl, Herbert, Dipl.-Ing.**
**Drozzaweg 15**
**D-8000 München 70 (DE)**

## Digital-Fernmeldesystem mit mindestens einem Vierdrahtleitungsabschnitt

In Fernmeldesystemen können bei der Übertragung von Signalen auf dem Übertragungsweg lineare Signalstörungen entstehen, zu deren Beseitigung Entzerrer und/oder Kompensatoren eingesetzt werden können. Solche Störungen können z. B. in Fernmeldesystemen, in denen zur Überführung von Zweidrahtleitungen in vierdrähtige Abschnitte und umgekehrt Gabelschaltungen (Brückenschaltungen) vorgesehen sind, dadurch hervorgerufen werden, daß eine solche Gabelschaltung eine exakte Nachbildung der Eingangsimpedanz der Zweidrahtleitung enthalten müßte, um eine vollständige Entkopplung des von der Gabelschaltung wegführenden Empfangszweigs der Vierdrahtleitung von dem zur Gabelschaltung hinführenden Sendezweig der Vierdrahtleitung zu erzielen, wozu die Leitungsnachbildung im Einzelfall durch manuellen Abgleich an die jeweilige Zweidrahtleitung angepaßt werden muß ; mit einer in der Praxis vielfach angewandten Kompromißnachbildung, mit der man unterschiedlichen Leitungsimpedanzen Rechnung zu tragen sucht, vermag die Gabelschaltung, die dann eine von der jeweiligen Leitungsimpedanz abhängige endliche Sperrdämpfung aufweist, die Sende- und Empfangssignale nur begrenzt voneinander zu entkoppeln. Auf der anderen Seite können auch bei optimalem Abgleich der Gabelschaltung Echos des eigenen Sendesignals, die durch auf der Zweidrahtleitung vorhandene Reflexionsstellen hervorgerufen werden, nicht ohne weiteres unterdrückt werden.

Zur Eliminierung oder zumindest Verringerung solcher Echosignale ist es (z. B. aus AGARD Conference Proceedings N° 103, 12-1 ... 12-16) bekannt, zusätzlich einen Kompensator vorzusehen, der ein dem zeitlichen Verlauf des Störsignals nachgebildetes Kompensationssignal erzeugt und von dem im von der Gabelschaltung wegführenden Empfangszweig der Vierdrahtleitung übertragenen Empfangssignal subtrahiert. Das Kompensationssignal kann dabei mit Hilfe eines variablen Filters erzeugt werden, das beim Aufbau jeder Verbindung so eingestellt wird, daß es auf ein Testsignal hin dieselbe Impulsantwort wie der Echopfad liefert.

Digitale Echokompensatoren mit adaptiven Filtern, die vom korrigierten Empfangssignal so eingestellt werden, daß dessen Echoanteil minimalisiert wird, sind dabei (z. B. aus US-PS 41 62 378) in zwei Varianten bekannt : Gemäß der einen Variante werden in einem Modulator nach Maßgabe der modulierenden Sendesignale Elementarspeicher angesteuert, die jeweils codierte Abtastwerte einer festen Impulsantwort liefern und deren Elementarsignal nach additiver Zusammenfassung adaptiv gefiltert werden ; gemäß der anderen Variante wird nach Maßgabe der modulierenden Sendesignale ein die möglichen Amplituden des modulierenden Sendesignals codiert enthaltender Festwertspeicher angesteuert, dessen Ausgangssignale nach adaptiver Filterung additiv zusammengefaßt werden. Bei beiden Varianten werden indessen im Festwertspeicher (Elementarspeicher) mögliche Momentanwerte nur von Bezugssignalen codiert gespeichert, aus denen dann erst mit Hilfe variabler Filter Korrektursignale abgeleitet werden.

Ein variables Filter kann auch, in Kette zum Übertragungsweg geschaltet, zur Entzerrung von auf dem Übertragungsweg verzerrten Signalen benutzt werden, wozu es zu dem verzerrten Signal vor- und nachlaufende Überschwinger geeigneten Vorzeichens und geeigneter Amplituden addieren kann (s. FREQUENZ 28 (1974) 5, 118 ... 122 und 155 ... 161). Das Filter wird dazu vor einer jeden Übertragung oder auch während des Betriebs wiederholt durch ein auf der Empfangsseite bekanntes, reproduzierbares Testsignal hin so eingestellt, daß optimale Entzerrung erreicht wird. Die Genauigkeit, mit der das gewünschte Übertragungsverhalten erzielt wird, hängt dabei vom Filteraufwand (z. B. Anzahl der Abgriffe eines Transversalfilters) und von dem bei der Filtereinstellung betriebenen Aufwand ab, der bis zum Einsatz von Großrechenanlagen zur Bestimmung der jeweiligen Systemeigenschaften und der erforderlichen Korrekturen gehen kann. Die Einstellung einer adaptiven Übertragungsschaltung zu Beginn eines jeden Übertragungsvorganges stellt indessen an die Geschwindigkeit des hierzu benutzten Rechners relativ hohe Anforderungen, insbesondere bei höheren Übertragungsbitraten von mehr als z. B. 12 kbit/s.

Die Erfindung zeigt demgegenüber einen Weg, für bestimmte Anwendungsfälle solche Anforderungen bei der Einstellung einer Übertragungsschaltung zu vermeiden und dennoch zu hoher Genauigkeit der Entzerrung bzw. Kompensation und zugleich zu entsprechenden Vereinfachungen der adaptiven Übertragungsschaltung selbst gelangen zu können, und zwar durch eine Korrektur gestörter Digitalsignale, die auf einer anderen Konzeption basiert und zu einer anderen Struktur führt, die insbesondere keine adaptiven Filter aufweist und mehr oder minder verwickelte, in einer Vielzahl innerhalb einer Zeiteinheit in solchen Filtern auszuführende Rechenoperationen vermeidet.

Ein auf einer solchen anderen Konzeption basierender, (aus DE-OS 28 46 105 = GB-A 20 07 946) bekannter digitaler Echokompensator weist einen Momentanwerte der Kompensationssignale selbst codiert speichernden Festwertspeicher auf, der bei seiner über eine Ansteuerschaltung bewirkten Ansteuerung nach Maßgabe der Sendesignalimpulse die entsprechenden Momentanwerte in ihrer codierten Darstellung einem Digital/Analog-Wandler zuführt, welcher daraus das entsprechende, von den gestörten Empfangssignalimpulsen zu subtrahierende Kompensationssignal bildet. Dabei werden im Festwertspeicher an einer Mehrzahl von Speicherplätzen Momentanwerte einer Mehrzahl von für unterschiedliche Sendesignal-Bitfolgen bestimmten, unterschiedlichen Kompensationssignalen gespeichert, und es wird bei der Speicheransteuerung nach Maßgabe jeweils einer mehrere Bits umfassenden Folge von Sendesignalbits ein jeweils einer solchen Sendesignal-Bitfolge zugeordnetes Korrektursignal ausgewählt.

Eine solche Auswahl unter mehreren ansteuerbaren Speicherplätzen und, damit verbunden, eine Auswahl unter unterschiedlichen Korrektursignalen in Abhängigkeit vom Auftreten unterschiedlicher Sendesignal-Bitfolgen erscheint indessen als relativ aufwendig, und die Erfindung zeigt nun einen Weg, mit wesentlich geringem Aufwand zu dennoch genauen Korrektursignalen zu gelangen.

Die Erfindung betrifft ein Digital-Fernmeldesystem mit mindestens einem Vierdrahtleitungsabschnitt, insbesondere mit Digital-Vermittlungsstellen und Zweidraht-Teilnehmeranschlußleitungen, die über Gabelschaltungen mit Vierdrahtleitungsabschnitten verbunden sind, sowie einem zur Korrektur gestörter Digitalsignale nach Maßgabe von Signalimpulsen ansteuerbaren Festwertspeicher im Vierdrahtleitungsabschnitt, der Korrektursignal-Momentanwerte codiert speichert und zur Korrektursignalbildung die entsprechenden Momentanwerte in ihrer codierten Darstellung einem Decoder zuführt, welcher daraus das entsprechende, mit dem gestörten Empfangssignal des Vierdrahtleitungsabschnitts zu verknüpfende Korrektursignal bildet ; dieses Digital-Fernmeldesystem ist erfindungsgemäß dadurch gekennzeichnet, daß zur Störsignalkompensation bzw. Signalentzerrung im Vierdrahtleitungsabschnitt der Festwertspeicher Momentanwerte nur eines Kompensations- bzw. Entzerrungssignals codiert speichert und bei seiner Ansteuerung auf jeden Sendesignalimpuls bzw. Empfangssignalimpuls hin die einzelnen Momentanwerte in ihrer codierten Darstellung dem Decoder (Demodulator) zuführt, welcher daraus jeweils ein und dasselbe entsprechende, von den verzerrten Empfangssignalimpulsen zu subtrahierende bzw. zu den verzerrten Empfangssignalimpulsen zu addierende Kompensations- bzw. Entzerrungssignal bildet.

Die Erfindung bringt den Vorteil mit sich, sowohl eine Auswahl unter unterschiedlichen Korrektursignalen in Abhängigkeit vom Auftreten unterschiedlicher Sendesignal-Bitfolgen als auch in variables Filter und bei jedem Verbindungsaufbau eine entsprechende Filtereinstellung unter real-time-Betriebsbedingungen vermeiden zu können und dennoch eine optimale Störsignalkompensation bzw. Signalentzerrung zu erreichen. Die Erfindung, die sich den Umstand zunutze macht, daß in Digital-Fernmeldesystemen die Impulsform der ungestörten Digitalsignale grundsätzlich festliegt, kann dabei nicht nur in reinen Vierdrahtsystemen zur Eliminierung von Störungen der Empfangssignale durch die eigenen Sendesignale Anwendung finden, sondern vorzugsweise auch in einem Digital-Fernmeldesystem mit Digital-Vermittlungsstellen und daran angeschlossenen Zweidraht-Teilnehmeranschlußleitungen, die nicht — wie durch eine Zweidraht-Vermittlungsstelle — durch die Digital-Vermittlungsstelle hindurch bei jeder neuen Verbindung einen neue Eigenschaften aufweisenden neuen Übertragungsweg, sondern stets nur ein und dieselbe, sie an der Digital-Vermittlungsstelle abschließende Gabelschaltung « sehen ».

Es sei an dieser Stelle bemerkt, daß es zur kontinuierlichen Erzeugung sinusförmiger Spannungen durch zeitliche Synthese von Gleichspannungen verschiedener Höhe (z. B. aus US-PS 3 057 972 oder aus US-PS 3 569 684) bekannt ist, entsprechende Sinuswerte in binär codierter Form einem Festwertspeicher zu entnehmen und einem Digital-Analog-Wandler zuzuführen ; Probleme einer Störsignalkompensation oder einer Signalentzerrung werden dabei indessen nicht berührt.

In weiterer Ausgestaltung der Erfindung kann der Festwertspeicher die Momentanwerte des Kompensations- (bzw. Entzerrungs-) signals in $\Delta$M-Darstellung, d. h. in Form entsprechender deltamodulierter Signale, speichern, was den Vorteil eines entsprechend einfachen Decoders mit sich bringt. Der Festwertspeicher kann in weiterer Ausgestaltung der Erfindung als C-MOS-Speicher ausgebildet sein, was den Vorteil mit sich bringt, die Momentanwerte des Kompensations- (bzw. Entzerrungs-) signals bei äußerst geringer statischer Verlustleistung speichern zu können.

Anhand der Zeichnung sei die Erfindung noch näher erläutert. Dabei zeigt

Figur 1 ein Ausführungsbeispiel eines Digital-Fernmeldesystems mit Störsignalkompensation gemäß der Erfindung, das einen Zweidrahtleitungsabschnitt aufweist ; Fig. 1a zeigt schaltungstechnische Einzelheiten.

Figur 2 zeigt ein Ausführungsbeispiel eines rein vierdrähtigen Digital-Fernmeldesystems mit Signalentzerrung gemäß der Erfindung.

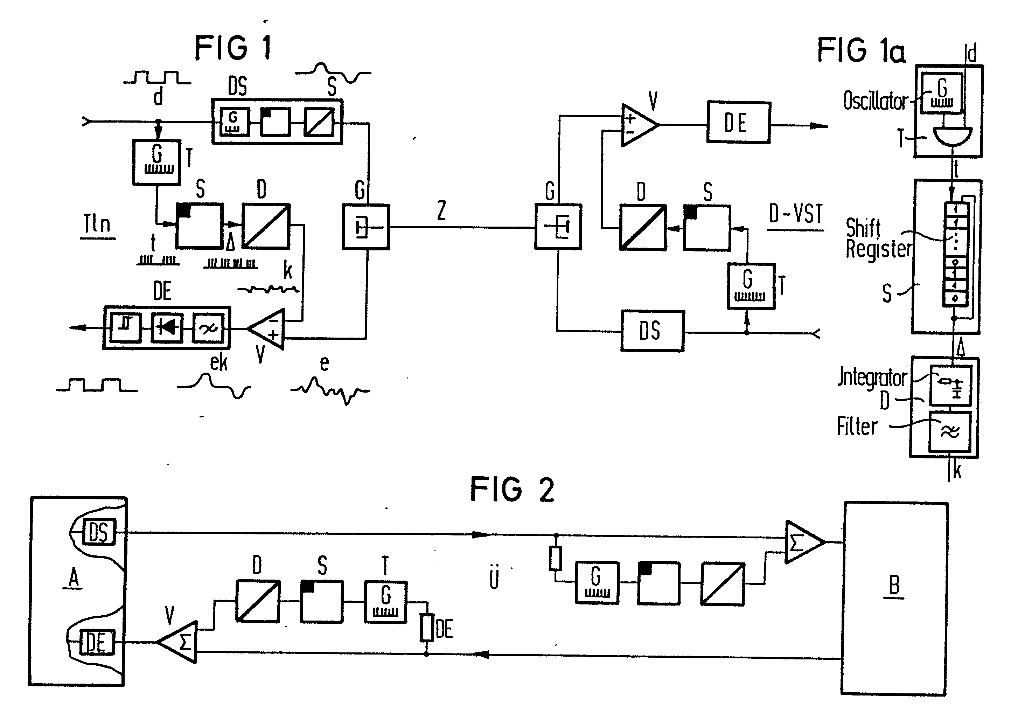

In der Zeichnung Fig. 1 ist ein Digital-Fernmeldesystem mit zwei Vierdrahtleitungsabschnitten Tln und D-VSt dargestellt, deren einer im Inneren einer Digital-Endstelle liegen mag, während der andere in einer Digital-Vermittlungsstelle liegen möge ; beide Vierdrahtleitungsabschnitte sind jeweils über eine Gabelschaltung G mit einer Zweidrahtleitung Z verbunden, die die Teilnehmeranschlußleitung bilden möge. Der Vierdrahtleitungsabschnitt Tln weist in seinem Sendezweig eine Digital-Sendeschaltung DS zum Aussenden von Sendesignalimpulsen S vorgegebener Form bzw. mit einem vorgegebenen Schwerpunkt ihres Frequenzspektrums auf ; in der Zeichnung ist dazu angedeutet, daß die Sendeschaltung DS ihr zugeführte Binärsignale d in sogenannte AMI- (alternate-mark-inversion-) Signalimpulse (Bipolar Signals) s umsetzt. Die Sendeschaltung DS kann dazu, ohne daß dies in Fig. 1 dargestellt ist, einen Codewandler aufweisen, der ihm eingangsseitig zugeführte Binärsignale d in AMI-Signale (Bipolar Signals) umsetzt, die dann in einem nachfolgenden Sendefilter eine Impulsformung erfahren; die Sendeschaltung DS kann aber auch, wie dies in Fig. 1 angedeutet ist, einen Momentanwerte der Sendesignalimpulse s codiert speichernden und nach Maßgabe der Digitalsignale d angesteuerten Festwertspeicher aufweisen, der die entsprechenden Momentanwerte in ihrer codierten Darstellung einem Decoder zuführt, welcher daraus die entsprechenden Sendesignalimpulse s bildet.

Des weiteren weist der Vierdrahtleitungsabschnitt Tln eine Digital-Empfangsschaltung DE zum Empfangen von Empfangssignalimpulsen ek auf; die Empfangsschaltung DE kann dazu ein entsprechendes Frequenzfilter enthalten, dem ein Empfangssignalwandler nachgeschaltet ist, der die vom Frequenzfilter abgegebenen Signale in entsprechende Binärsignale umformt, wobei bei Zugrundelegung der in Fig. 1 angedeuteten Signalformen ein solcher Empfangssignalwandler im Prinzip durch eine Gleichrichter-Begrenzer-Schaltung gebildet sein kann.

Die Sendesignalimpulse s gelangen vom Sendezweig (DS) des Vierdrahtleitungsabschnitts Tln über die Gabelschaltung G zur Zweidrahtleitung Z, über die sie zur Gegenstelle D-VSt des in der Zeichnung dargestellten Digital-Fernmeldesystems übertragen werden; in umgekehrter Richtung gelangen von der Gegenstelle D-VSt herrührende, über die Zweidrahtleitung Z übertragene Signalimpulse über die Gabelschaltung G als Empfangssignalimpulse zum Empfangszweig (DE) des Vierdrahtleitungsabschnitts Tln. Weist die Zweidrahtleitung Z Reflexionsstellen auf, wie sie durch Stellen sprunghafter Änderungen von Leitungsparametern gegeben sein können, so gelangen außer den eigentlichen Empfangssignalimpulsen aber auch Echos der Sendesignalimpulse s zum Empfangszweig des Vierdrahtleitungsabschnitts Tln, und außerdem können bei begrenzter Gabelsperrdämpfung auch direkt Anteile der Sendesignalimpulse s in den Empfangszweig gelangen. Wie in Fig. 1 angedeutet ist, tritt somit im Empfangszweig zunächst ein Empfangssignalgemisch e aus den eigentlichen Empfangssignalimpulsen und einem aus Echosignalen und Übersprechsignalen zusammengesetzten Störsignal auf. Dieses Störsignal wird nun dadurch kompensiert, daß man von dem Empfangssignalgemisch e ein Kompensationssignal k subtrahiert, welches das Störsignal nachbildet.

Eine solche Kompensation könnte, wie schon gesagt, mit Hilfe eines variablen Filters bewirkt werden, das beim Aufbau jeder Verbindung entsprechend eingestellt wird, was indessen an die Geschwindigkeit eines hierzu benutzten Rechners relativ hohe Anforderungen stellt.

Erfindungsgemäß wird nun die gewünschte Störsignalkompensation in dem Vierdrahtleitungsabschnitt Tln auf ganz andere Weise bewirkt:

Erfindungsgemäß ist dem Vierdrahtleitungsabschnitt Tln ein Festwertspeicher S zugeordnet, der Momentanwerte der erforderlichen Kompensationssignale codiert speichert. Diese Momentanwerte können einmalig, bei Inbetriebnahme der Zweidraht-Teilnehmeranschlußleitung Z, in einem externen, vierdrahtleitungsseitig an die Gabelschaltung G anschaltbaren Rechner (Mikrocomputer) optimal errechnet werden und daraufhin fest in den Speicher S eingegeben worden sein. Für den nur bei der erstmaligen Inbetriebnahme der Teilnehmeranschlußleitung Z bzw. des Digital-Fernmeldesystems Tln-Z-D-VSt benötigten Mikrocomputer gilt, daß er die erforderlichen Berechnungen nicht im Real-Time-Betrieb zu machen braucht, da bei der Inbetriebnahme ohnehin genügend Zeit zur Verfügung steht; auf der anderen Seite kann der Rechner auch sehr aufwendig ausgestattet sein, da er nur einmal für eine Vielzahl von sukzessive eingeschalteten Digital-Fernmeldesystemen der in der Zeichnung dargestellten Art benötigt wird. Der Code, in dem die Momentanwerte der Kompensationssignale k gespeichert sind, kann grundsätzlich beliebig gewählt sein; zweckmäßig ist ein ΔM-Darstellung, d. h. eine Momentanwertedarstellung durch eine Folge von Signalbits, wie sie sich aus den errechneten Momentanwerten des Kompensationssignals durch Deltamodulation ergibt, da dann der dem Festwertspeicher S nachfolgende Decoder (Demodulator) D entsprechend einfach wird: Er enthält dann ein einfaches Integrationsglied mit nachfolgendem Tiefpaßfilter.

Bei jeder Signalübertragung im Digital-Fernmeldesystem Tln-Z-D-VSt wird dann der Festwertspeicher S, der als C-MOS-Speicher ausgebildet sein kann, nach Maßgabe der der Sendeschaltung DS zugeführten Digitalsignale d angesteuert, so daß auf jeden Digitalsignal-Impuls hin die einzelnen Momentanwerte einer Kompensationssignalimpulsfolge, wie sie in Fig. 1 mit k angedeutet ist, codiert speichernden Speicherzellen des Festwertspeichers S sukzessive ausgelesen werden. Dieses Auslesen des Festwertspeichers S geht mit einer der Anzahl der Speicherzellen entsprechenden höheren Taktgeschwindigkeit vor sich, beispielsweise mit der zwanzigfachen Taktgeschwindigkeit, wenn im Festwertspeicher S zur Darstellung einer Kompensationssignalimpulsfolge zwanzig ΔM-Signalelemente gespeichert sind, wie sie in Fig. 1 mit Δ angedeutet sind. Aus der Zeichnung Fig. 1 und Fig. 1a wird dazu ersichtlich, daß die Speicheransteuerung von einem Taktgenerator T her bewirkt werden kann, der im Rhythmus der im Sendezweig des Vierdrahtleitungsabschnitts Tln auftretenden Digitalsignale d gesteuert wird und dabei entsprechende Ansteuersignale t an den Festwertspeicher S, der bei Speicherung von ΔM-Signalelementen durch ein zu einem Ring geschlossenes Schieberegister gebildet sein kann, liefert.

Das vom Decoder D gelieferte Kompensationssignal k wird dann in einer beispielsweise durch einen Operationsverstärker gegebenen Verknüpfungsschaltung V von dem Empfangssignalgemisch e subtrahiert, so daß am Ausgang der Verknüpfungsschaltung V nur noch die eigentlichen, in Fig. 1 mit ek angedeuteten, ggf. aber auch eine andere Impulsform aufweisenden Empfangssignalimpulse auftreten, die dem Eingang der Empfangsschaltung DE zugeführt werden.

In entsprechender Weise ist in dem in Fig. 1 dargestellten Digital-Fernmeldesystem auch der Vierdrahtleitungsabschnitt D-VSt der beispielsweise durch eine Digital-Vermittlungsstelle gegebenen Gegenstelle ausgebildet, ohne daß dies hier nochmals ins Einzelne gehend erläutert werden muß.

Während die vorstehend erläuterte Störsignalkompensation gemäß der Erfindung — für deren Funktion übrigens das Vorhandensein einer Gabelschaltung, wie sie in dem in Fig. 1 dargestellten Digital-Fernmeldesystem enthalten ist, prinzipiell nicht erforderlich ist — einen Zugriff der gewissermaßen in einem Nebenzweig zwischen Sendezweig und Empfangszweig des Vierdrahtleitungsabschnitts liegenden Kompensationsschaltung zur Sendeseite erfordert, wie dies beispielsweise in Fig. 1 angedeutet ist, ist ein solcher Zugriff bei einer Empfangssignalentzerrung nicht gegeben. Bei einer solchen Empfangssignalentzerrung wird vielmehr der dann Momentanwerte von Entzerrungssignalen codiert speichernde Festwertspeicher S nach Maßgabe der verzerrten Empfangssignalimpulse angesteuert, wozu in Abwandlung von den in Fig. 1 angedeuteten Verhältnissen der dem Festwertspeicher vorgeschaltete Ansteuergenerator eingangsseitig mit dem die verzerrten Empfangssignalimpulse e führenden Ausgang der Gabelschaltung G verbunden sein kann und der dem Festwertspeicher S nachgeschaltete Decoder D ausgangsseitig mit einem Additionseingang eines (statt eines Subtrahierers) in den Empfangszweig des Vierdrahtleitungsabschnitts eingefügten Summierers verbunden ist.

In der Zeichnung Fig. 2 ist ein Digital-Fernmeldesystem mit einer zwischen zwei Endgeräten A und B, die, wie für das Endgerät A angedeutet ist, sendeseitig eine Sendeschaltung DS und empfangsseitig eine Empfangsschaltung DE der oben zu Fig. 1 erläuterten Art aufweisen können, verlaufenden Vierdrahtleitung Ü dargestellt, in der eine solche Signalentzerrung vorgesehen ist. Zu einer solchen Signalentzerrung der dem Endgerät A zugeführten Empfangssignalimpulse ist ein Festwertspeicher S vorgesehen, der Momentanwerte der erforderlichen Entzerrungssignale speichert. Diese Momentanwerte können wiederum einmalig, bei der Inbetriebnahme des in Fig. 2 dargestellten Digital-Fernmeldesystems, in einem externen Rechner errechnet und daraufhin fest in den Speicher S eingegeben worden sein. Bei jeder Signalübertragung im Digital-Fernmeldesystem A-Ü-B wird dann der Festwertspeicher S nach Maßgabe der dem Endgerät A zugeführten, verzerrten Empfangssignalimpulse angesteuert. Diese Ansteuerung kann in ähnlicher Weise vor sich gehen, wie dies oben anhand der Fig. 1 und Fig. 1a erläutert wurde, nämlich mit Hilfe eines Taktgenerators T, der nunmehr jedoch eingangsseitig über eine Empfangsschaltung der oben erläuterten Art mit dem zum Endgerät A führenden Empfangszweig der Übertragungsleitung Ü verbunden ist. Die von dem dem Festwertspeicher S nachfolgenden Decoder D gelieferten Entzerrungssignale werden nunmehr einem Addiereingang eines in den zum Endgerät führenden Empfangszweig der Übertragungsleitung Ü eingefügten Summierers V zugeführt und dort mit den verzerrten Empfangssignalimpulsen verknüpft, so daß am Ausgang des Summierers V nur noch die eigentlichen, von Verzerrungseinflüssen befreiten und insoweit dann unverzerrten Empfangssignalimpulse auftreten, die dem Eingang des Endgerätes A zugeführt werden.

In entsprechender Weise ist in dem in Fig. 2 dargestellten Digital-Fernmeldesystem auch in dem zum Endgerät B führenden Empfangszweig der Übertragungsleitung Ü eine Signalentzerrung vorgesehen, ohne daß dies hier nochmals ins Einzelne gehend erläutert werden muß.

**Ansprüche**

1. Digital-Fernmeldesystem mit mindestens einem Vierdrahtleitungsabschnitt, insbesondere mit Digital-Vermittlungsstellen und Zweidraht-Teilnehmeranschlußleitungen, die über Gabelschaltungen (G) mit Vierdrahtleitungsabschnitten (D-VST) verbunden sind, sowie mit einem zur Korrektur gestörter Digitalsignale nach Maßgabe von Signalimpulsen ansteuerbaren Festwertspeicher (S) im Vierdrahtleitungsabschnitt, der Korrektursignal-Momentanwerte codiert speichert und zur Korrektursignalbildung die entsprechenden Momentanwerte in ihrer codierten Darstellung einem Decoder (D) zuführt, welcher daraus das entsprechende, mit dem gestörten Empfangssignal (e) des Vierdrahtleitungsabschnitts zu verknüpfende Korrektursignal (k) bildet, dadurch gekennzeichnet, daß zur Störsignalkompensation bzw. Signalentzerrung im Vierdrahtleitungsabschnitt (D-VSt ; Tln) der Festwertspeicher (S) Momentanwerte nur eines Kompensations- bzw. Entzerrungssignales (k) codiert speichert und bei seiner Ansteuerung auf jeden Sendesignalimpuls (d) bzw. Empfangssignalimpuls (e) hin die einzelnen Momentanwerte in ihrer codierten Darstellung dem Decoder (Demodulator) (D) zuführt, welcher daraus jeweils ein und dasselbe entsprechende, von den verzerrten Empfangssignalimpulsen (e) zu subtrahierende bzw. zu den verzerrten Empfangssignalimpulsen (e) zu addierende Kompensations- bzw. Entzerrungssignal (k) bildet.

2. Digital-Fernmeldesystem nach Anspruch 1, dadurch gekennzeichnet, daß ein dem Momentanwerte von Kompensationssignalen codiert speichernden Festwertspeicher (S) vorgeschalteter Ansteuergenerator (T) eingangsseitig mit dem Sendezweig des Vierdrahtleitungsabschnitts (TIn) verbunden ist und der dem Festwertspeicher (S) nachgeschaltete Decoder (D) ausgangsseitig mit dem Subtrahiereingang eines in den Empfangszweig des Vierdrahtleitungsabschnitts (TIn) eingefügten Operationsverstärkers (V in Fig. 1) verbunden ist.

3. Digital-Fernmeldesystem nach den Ansprüchen 1 oder 2, dadurch gekennzeichnet, daß ein dem Momentanwerte von Entzerrungssignalen codiert speichernden Festwertspeicher (S) vorgeschalteter Ansteuergenerator (T) eingangsseitig mit dem Empfangszweig des Vierdrahtleitungsabschnitts (Ü) verbunden ist und der dem Festwertspeicher (S) nachgeschaltete Decoder (D) ausgangsseitig mit dem Addiereingang eines in den Empfangszweig des Vierdrahtleitungsabschnitts (Ü) eingefügten Summierers (V in Fig. 2) verbunden ist.

4. Digital-Fernmeldesystem nach einem der Ansprüche 1 bis 3, dadurch gekennzeichnet, daß die Momentanwerte der Kompensations- bzw. Entzerrungssignale (k) in ΔM-Darstellung gespeichert sind.

5. Digital-Fernmeldesystem nach einem der Ansprüche 1 bis 4, dadurch gekennzeichnet, daß die Momentanwerte der Kompensations- bzw. Entzerrungssignale in einem C-MOS-Speicher (S) gespeichert sind.


## Claims

1. Digital telecommunications system comprising at least one four-wire line section, in particular comprising digital exchange stations and two-wire subscriber connection lines which are connected to four-wire line sections (D-VST) via hybrid circuits (G), and comprising a read only memory (S) in the four-wire line section which can be controlled in accordance with signal pulses in order to correct disturbed digital signals and which stores correction signal instantaneous values in coded fashion and which in order to form the correction signal feeds the appropriate instantaneous values in their coded form to a decoder (D) which therefrom forms the corresponding correction signal (k), which is to be linked with the disturbed received signal (e) of the four-wire line section, characterised in that for disturbing signal compensation or the signal equalisation, as the case may be, in the four-wire line section (D-VST ; TIn) the read only memory (S) stores instantaneous values of only one compensation or equalisation signal (k) in coded fashion and during its activation following each transmitted signal pulse (d) or received signal pulse (e), as the case may be, feeds the individual instantaneous values in their coded form to the decoder (demodulator) (D), which respectively therefrom forms one and the same corresponding compensation or equalisation signal (k) which is to be subtracted from the distorted received signal pulses (e) or added to the distorted received signal pulses (e), as the case may be.

2. Digital telecommunications system as claimed in claim 1, characterised in that at the input end, a drive generator (T) connected preceding the read only memory (S), which stores instantaneous values of compensation signals in coded form, is connected to the transmitting branch of the four-wire line section (TIn) and at the output end, the decoder (D) connected following the read only memory (S) is connected to the subtracting input of an operational amplifier (V in Fig. 1) which is inserted into the receiving branch of the four-wire line section (TIn).

3. Digital telecommunications system as claimed in claims 1 or 2, characterised in that at the input end, a drive generator (T) connected preceding the read only memory (S), which stores instantaneous values of equalisation signals in coded form, is connected to the receiving branch of the four-wire line section (Ü) and at the output end, the decoder (D) connected following the read only memory (S) is connected to the adding input of a summer (V in Fig. 2) which is inserted into the receiving branch of the four-wire line section (Ü).

4. Digital telecommunications system as claimed in one of claims 1 to 3, characterised in that the instantaneous values of the compensation or equalisation signals (k), as the case may be, are stored in ΔM-representation.

5. Digital telecommunications system as claimed in one of claims 1 to 4, characterised in that the instantaneous values of the compensation or equalisation signals are stored in a C-MOS-store (S).


## Revendications

1. Système de télécommunications numérique comportant au moins une section de ligne quadrifilaire, et notamment des centraux numériques et des lignes de raccordement d'abonnés bifilaires, qui sont raccordées à des sections de ligne quadrifilaire (D-VST) par l'intermédiaire de termineurs (G), ainsi que, dans la section de ligne quadrifilaire, une mémoire fixe (S), qui peut être commandée en fonction d'impulsions de signaux pour la correction de signaux numériques perturbés, mémorise sous forme codée des valeurs instantanées de signaux de correction et, pour la formation des signaux de correction, applique les valeurs instantanées correspondantes, sous leur forme codée, a un décodeur (D) qui forme à partir de celles-ci le signal de correction correspondant (k), devant être combiné avec le signal de réception (e) perturbé de la section de ligne quadrifilaire, caractérisé par le fait que pour la compensation des signaux perturbateurs ou la correction des signaux dans la section de ligne quadrifilaire (D-VST ; TIn), la mémoire fixe (S) mémorise, sous forme codée, des valeurs instantanées d'un seul signal de compensation ou de correction (k) et, lors de sa commande par suite de chaque impulsion de signal d'émission (d) ou impulsion de signal de réception (e), applique les valeurs instantanées individuelles, sous leur forme codée, au décodeur (démodulateur) (D) qui forme respectivement à partir de celles-ci un seul et même signal de compensation ou de correction (k) correspondant devant être soustrait des impulsions du signal de réception (e) déformé ou ajouté aux impulsions du signal de réception (e) déformé.

2. Système de télécommunications numérique suivant la revendication 1, caractérisé par le fait qu'un générateur de commande (T), qui est monté en amont de la mémoire fixe (S) qui mémorise sous forme codée des valeurs instantanées de signaux de compensation, est relié côté entrée avec la branche d'émission de la section de ligne quadrifilaire (Tln), et que le décodeur (D), qui est monté en aval de la mémoire fixe (S), est relié côté sortie à l'entrée de soustraction d'un amplificateur opérationnel (V sur la fig. 1) qui est inséré dans la branche de réception de la section de ligne quadrifilaire (Tln).

3. Système de télécommunications numérique suivant les revendications 1 ou 2, caractérisé par le fait qu'un générateur de commande (T), monté en amont de la mémoire fixe (S) qui mémorise sous forme codée des valeurs instantanées de signaux de correction, est relié côté entrée à la branche de réception de la section de ligne quadrifilaire (Ü), et que le décodeur (D) monté en aval de la mémoire fixe (S) est relié côté sortie à l'entrée additionneuse d'un circuit sommateur (V sur la fig. 2) inséré dans la branche de réception de la section de ligne quadrifilaire (Ü).

4. Système de télécommunications numérique suivant l'une des revendications 1 à 3, caractérisé par le fait que les valeurs instantanées des signaux de compensation ou de correction (k) sont mémorisées suivant la représentation ΔM.

5. Système de télécommunications numérique suivant l'une des revendications 1 à 4, caractérisé par le fait que les valeurs instantanées des signaux de compensation ou de correction sont mémorisées dans une mémoire C-MOS (S).

FIG 1

FIG 1a

FIG 2